# EUROPEAN PATENT APPLICATION

(11) **EP 2 515 347 A1**
(43) Date of publication of application: **24.10.2012**
(21) Application number: 12164393.6
(22) Date of filing: 17.04.2012
(51) Int. Cl.: H01L 31/042, F24J 2/52, E01F 8/00, E02D 5/00, H01L 31/048

(54) **Pillar construction for photovoltaic systems**

(30) Priority: 21.04.2011 IT MI20110685
(71) Applicant: Techsun Energy S.R.L., 2011 Corbetta (IT); E.MA.Prefabbricati di Mascazzini Giuseppe S.R.L., 21052 Busto Arsizio (IT)
(72) Inventor: Cassani, Walter, I-20011 CORBETTA (IT); Mascazzini, Fabrizio, I-21052 BUSTO ARSIZIO (IT)
(74) Representative: Cicogna, Franco

(57) **Abstract**

A pillar structure for photovoltaic systems, characterized in that said pillar structure comprises a prefabricated reinforced concrete substantially vertically extending construction; said construction including a bottom, which is either arranged in a prefabricated plinth or in a cast foundation and being shaped as a glass or socket to provide stability for said structure, said construction including a plurality of bearing surfaces which are inclined at a preset angle and offset from one another, said bearing surfaces supporting corresponding photovoltaic panels.

## Description

### BACKGROUND OF THE INVENTION

The present invention relates to a pillar construction specifically designed for photovoltaic systems.

As is known, an electric power generating photovoltaic system comprises a plurality of photovoltaic panels mounted at a given inclination with respect to the ground.

Since the system power depends on the used panels, a conventional photovoltaic system occupies a large area which cannot be used for other applications.

Another drawback of prior photovoltaic systems is that the ground distributed photovoltaic panels are susceptible to damages, either intentional or not, and thefts.

### SUMMARY OF THE INVENTION

Accordingly, the aim of the present invention is to provide such a photovoltaic system pillar construction overcoming the prior art drawbacks.

Within the scope of the above mentioned aim, a main object of the invention is to provide such a pillar construction adapted to drastically reduce the photovoltaic system occupied area.

Another object of the present invention is to provide such a pillar construction allowing the photovoltaic panels to be quickly and easily installed at an optimum functional and operating system position.

Yet another object of the present invention is to provide such a pillar construction which is very reliable and safe in operation.

According to one aspect of the present invention, the above mentioned aim and objects, as well as yet other objects, which will become more apparent hereinafter, are achieved by a pillar construction for photovoltaic systems, **characterized in that** said pillar construction comprises a prefabricated structure made of a concrete material and essentially vertically extending.

Said prefabricated structure comprises a structure base, which is arranged in a glass-shaped plinth, either of a prefabricated or an in-situ cast type, designed for providing the structure with the target stability.

The prefabricated structure comprises a plurality of bearing surfaces which are inclined, at a set slanting angle, and being offset from one another.

Said bearing surfaces bear or support corresponding photovoltaic panels.

### BRIEF DESCRIPTION OF THE DRAWINGS

Further characteristics and advantages of the present invention will become more apparent hereinafter from the following disclosure of a preferred, though not exclusive, embodiment of the invention, which is illustrated, by way of an indicative, but not limitative example, in the accompanying drawings, where:

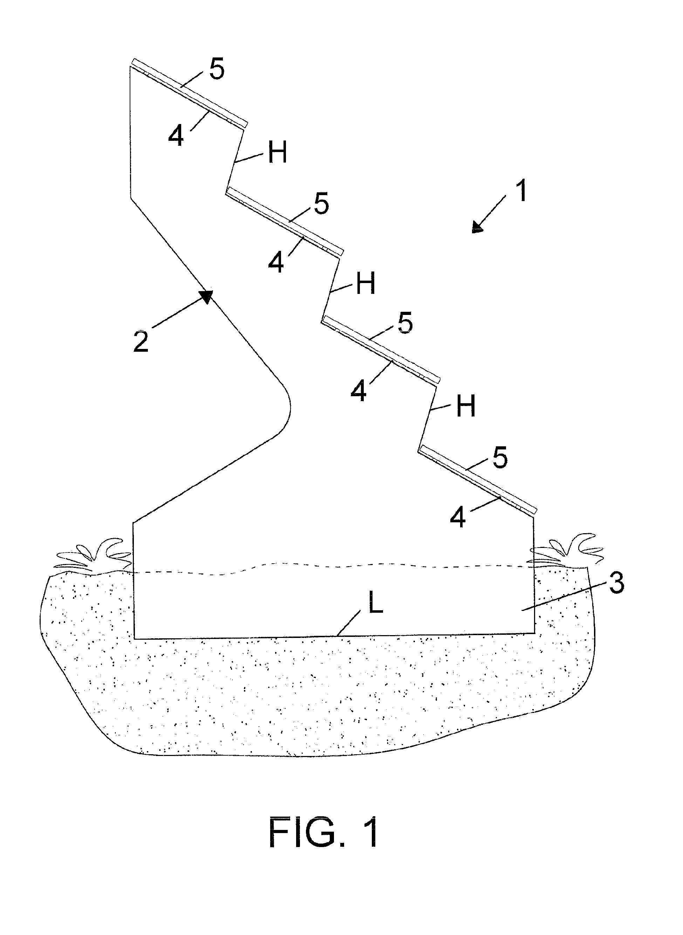

Figure 1 is a side elevation view of a photovoltaic panel pillar construction according to the present invention;

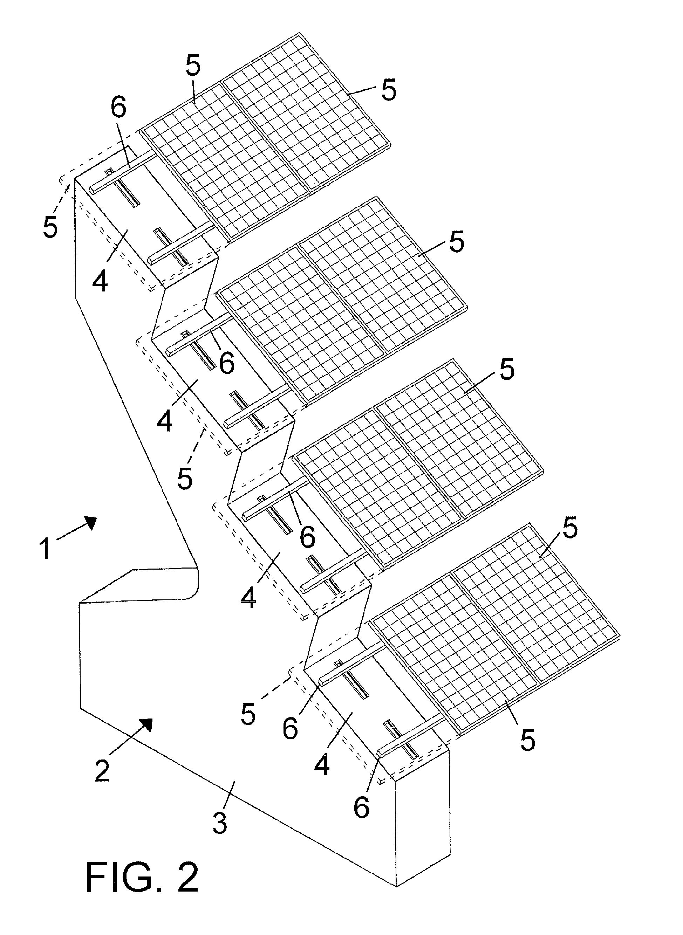

Figure 2 is a perspective partially exploded view showing a use of the inventive pillar construction for mounting photovoltaic panels; and

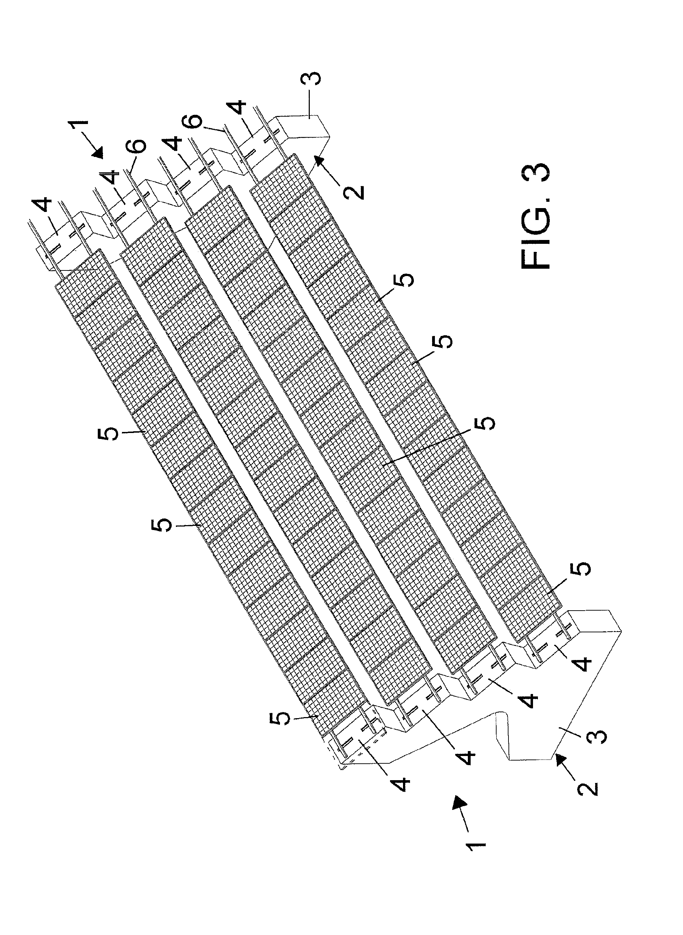

Figure 3 is a further perspective view of the photovoltaic system including the pillar construction according to the present invention.

### DESCRIPTION OF THE PREFERRED EMBODIMENTS

With reference to the number references of the above mentioned figures, the photovoltaic system pillar construction according to the present invention, which has been generally indicated by the reference number 1, comprises a prefabricated structure 2, made of a solid concrete, and which essentially vertically extends.

Said prefabricated structure 2 comprises a structure base or bottom 3 which is arranged in a plinth member, either of a prefabricated or an in-situ cast type, and of glass shape, providing the prefabricated structure with the target operating stability.

According to the present invention, the prefabricated structure comprises a plurality of bearing surfaces, indicated by the reference number 4, which are inclined, with a preset slanting, and being offset from one another.

The bearing surfaces 4 support corresponding series arranged photovoltaic panels 5, through bearing beams 6 which directly bear on said surfaces.

The pillar construction has been specifically designed for bearing the photovoltaic panel weights and the wind and snow stress and load.

More specifically, the bearing surfaces have been so designed as to optimize their inclination thereby in turn providing a maximum solar panel efficiency while preventing the construction from achieving excessive heights.

In particular, each said prefabricated article is adapted to bear up to four bearing surface levels 4.

The construction according to the present invention allows to support or arrange a plurality of prefabricated structures or articles of manufacture with different inter-axes thereby fitting the photovoltaic system to local requirements.

In fact, a proper orientation of the solar panels is, as it should be well known, the south orientation with an inclination of about 30 degrees.

At midday, a day central time, the sun is arranged at a south orientation, thereby all objects facing south will be exposed to sun light for a maximum number of daily hours.

On the other hand, though south is the direction to be preferred for installing a solar panel, such a direction does not always represent an ideal condition.

In actual practice, each selected orientation will have a corresponding time or hour thereat the exposition will be the optimum one.

East offset orientations will provide an enhanced performance in morning hours, whereas west directed orientations will provide a maximum efficiency of performance in the afternoon.

Since the operating efficiency of a flat photovoltaic panels depends, in addition to its orientation, also on the environment temperature, it would be preferred to favor an afternoon hour exposition for which, even in winter time, the days will be "hotter".

In this connection it should be also pointed out that also the photovoltaic system sky sun altitude will have a very high importance in designing any photovoltaic systems.

As is further known, the sky sun altitude varies depending on the location or place latitude.

For example, in the boreal hemisphere, the sky sun position will progressively lower as one progressively approaches the north pole.

Moreover, the sky sun position also depends on the year period.

At a location at middle latitudes of the boreal hemisphere, the sky sun altitude will substantially vary during a year.

In the winter solstice day, that is March 21, the sun appears low, whereas the north pole is fully shaded.

On the contrary, in the summer solstice day (June 21), the sun appears at a high sky position.

To achieve a perpendicular radiation, the inclination of the solar panels, accordingly, should be based on the precise sun sky position.

In particular, the solar panel inclination with respect to a plane is considered very important for a proper operation of the photovoltaic system.

Actually, such an importance is the same as that of the orientation, and not greater.

An error of 20 degrees with respect to an ideal inclination, will correspond to an orientation error of 20 degrees, and accordingly will be comparatively negligible.

December 21 is the year shorter day and the sun, at midday, will achieve a maximum height or altitude of about 21 degrees.

Thus, to arrange a solar panel perpendicular to the sun, it should be oriented toward south and have a 69 degree inclination.

On the other hand, June 21 is the longer day of a year, and the sun, at midday will achieve a maximum altitude of about 69 degrees.

In such a condition, in order to have a solar panel perpendicular to the sun, it should be oriented toward south and have an inclination of 22 degrees.

Thus, it should be apparent that a greater inclination will favor the operating efficiency of a solar panel in winter times, whereas a slight inclination will favor a summer exposition.

Errors in photovoltaic system orientation will affect in a less degree the photovoltaic system production rate, with respect to a solar thermal environment, since the latter will operate by substantially fully using a direct solar irradiation, whereas in a photovoltaic system, the solar irradiation diffused component, that is that which is not determined by the orientation, will affect a rate of 50% of the total energy generated by the system.

More specifically, and for providing an example of the reference values, the pillar construction according to the present invention, installed at an Italy southern situ with an orientation of 30°, will be characterized by about 1700 equivalent operating hours, whereas a construction installed at an Italy central region will provide 1500 operating houses and, finally, a construction installed at an Italy north region will provide 1300 operating hours.

A very important feature of the present invention is the possibility of modifying the inclination of the bearing surface of each constructional module, depending on the sun radiation condition at the place where the photovoltaic system structure will be installed.

The bearing surface 4 has an inclination of 30° whereas, by either increasing or decreasing the extension of the vertical wall H joining the different bearing surfaces, the structure base L will be proportionately modified.

This will allow to efficiently exploit, with respect to a prior method for installing on the ground the solar panels, the height space.

Actually, the vertically extension of the pillar construction according to the present invention allows to reduce the occupied space, with respect to a horizontal ground installation of the photovoltaic system modules, by properly exploiting the shading effects.

According to a further aspect of the present invention, the pillar construction according to the present invention may further comprise channels for receiving optional cables for providing an electric coupling between the DC and AC sides.

Said pillar construction may also comprise further channels for optical fibers to be connected to alarm systems.

The subject construction may be easily fitted to specific environmental requirements and, for example, may be coated by stone materials or painted.

The connection structures, such as the connection beams 6, may be made of aluminium iron or metal alloy materials, for a quick installation by anti-theft screw and bolt arrangements.

Moreover, the subject construction, arranged at a border regions, may provide a barrier function and, in the meanwhile, a power generating system.

It has been found that the invention fully achieves the intended aim and objects.

In fact, the invention has provided a pillar construction allowing to install the photovoltaic panels with an optimum energy generating efficiency condition, while drastically reducing the photovoltaic system occupied area, with respect to a conventional type of ground extending system.

In practicing the invention, the used materials, as well as the contingent size and shapes can be any, depending on requirements.

## Claims

1. A pillar structure for photovoltaic systems, **characterized in that** said pillar structure comprises a prefabricated reinforced concrete substantially vertically extending construction; said construction including a bottom, which is arranged either in a prefabricated plinth or in an in-situ cast foundation and being shaped as a glass or socket to provide stability for said structure, said construction including a plurality of bearing surfaces which are inclined at a preset angle and offset from one another, said bearing surfaces supporting corresponding photovoltaic panels.

2. A pillar structure, according to claim 1, **characterized in that** said photovoltaic panels are arranged on said bearing surfaces through supporting beams which are directly supported on said surfaces.

3. A pillar structure, according to claim 1, **characterized in that** each said prefabricated construction is designed for bearing up to four levels of bearing surfaces.

4. A pillar structure, according to claim 1, **characterized in that** said pillar structure comprises a plurality of prefabricated constructions with different inter-axes thereby fitting the system to local requirements.

5. A pillar structure, according to one or more of the preceding claims, **characterized in that** said bearing surface inclination may be varied depending on radiating conditions at the place whereat said structure is installed.

6. A pillar structure, according to one or more of the preceding claims, **characterized in that** said bearing surface is inclined at 30°, and, by increasing or decreasing the size of the vertical wall coupling said bearing surfaces, the bottom of said construction is correspondingly modified.

7. A pillar structure, according to one or more of the preceding claims, **characterized in that** said pillar structure comprises a plurality of channels for engaging DC and AC electric cables.

8. A pillar structure, according to one or more of the preceding claims, **characterized in that** said pillar structure comprises a plurality of channels for receiving optical fibers coupled to alarm systems.

9. A pillar structure, according to one or more of the preceding claims, **characterized in that** said pillar structure may be fitted to environmental requirements and being either coated by stone materials or being painted.

10. A pillar structure, according to one or more of the preceding claims, **characterized in that** said pillar structure comprises a plurality of clamping members, such as clamping beams, which are made of aluminium, iron or alloy materials, and may be easily installed by anti-tampering screw elements.
